Europäisches Patentamt

**European Patent Office**

Office européen des brevets

(19)

(11) Publication number : **0 483 995 A1**

# EUROPEAN PATENT APPLICATION

(12)

(21) Application number : **91309446.2**

(22) Date of filing : **15.10.91**

(51) Int. Cl.⁵ : **C04B 26/26,** E01C 7/26,
E01D 19/08, C08L 95/00,
// (C04B26/26, 14:42, 18:22,
24:26, 24:36), (C04B26/26,
14:48, 16:04, 24:26, 24:36)

(30) Priority : **24.10.90 GB 9023112**

(43) Date of publication of application :
**06.05.92 Bulletin 92/19**

(84) Designated Contracting States :
**AT BE CH DE DK ES FR GR IT LI LU NL SE**

(71) Applicant : **FIBRESCREED LIMITED**
**Bellbrook Estate**
**Uckfield East Sussex TN22 1QL (GB)**

(72) Inventor : **Bickerstaff, Eric**
**12 Leyden Drive**
**Seaford, East Sussex (GB)**
Inventor : **Lucas, Graham John**
**41 Hunters Way**
**Uckfield, East Sussex (GB)**

(74) Representative : **Williams, Trevor John**
**J.A. KEMP & CO. 14 South Square Gray's Inn**
**London WC1R 5LX (GB)**

(54) **Waterproofing material.**

(57)   A waterproofing material suitable for applying
as a layer to a roofdeck comprises mineral
fillers, aggregate and chopped fibres, bound
together with a mixture of bitumen and hyd-
rocarbon resin, preferably also including a
block copolymer such as styrene butadiene
styrene or styrene isoprene styrene.

EP 0 483 995 A1

This invention relates to a waterproofing material and, more especially, to a waterproofing material suitable for use as a membrane on a bridge deck or other similar structure.

Bridge decks pose a particular problem in that a waterproofing membrane is required over the bridge deck in order to prevent water being able to attack the concrete, reinforcing material in the concrete or other structural material and yet can be subjected to very heavy wear and tear, due to the traffic passing thereover. Early bridge decks were waterproofed with a membrane of mastic asphalt which has the disadvantage of being heavy and brittle and more recently it has been common to use a waterproof felt adhered to the roof deck by bitumen. More recently, in order to try and provide a more reliable membrane, attempts have been made to use a resin-based membrane, particularly polyurethane, despite the very substantial expense involved. Apart from the expense problem, these resin-based membranes have proved difficulty reliably to adhere to the overlying structure with problems arising during use, especially in those portions of the membrane which are beneath the wheel tracks of the vehicles using the bridge. Thus, it must be understood that conventionally in providing a road on a bridge, the bridge deck first is waterproofed using the membrane and that membrane is then covered with a 20 to 25 mm thick layer of sand with this layer of sand then being covered by the conventional road laying materials. There is a lack of compatibility between this resin-based membrane and the protective sand carpet. In order to provide a long life over many years, it is important that the membrane should have some degree of flexibility and yet be resistant to penetration.

The object of the present invention is to provide a waterproofing material which is particularly suitable for use in the difficulty environment of a roof deck membrane.

According to the present invention, there is provided a waterproofing material comprising mineral fillers, aggregate and chopped fibres, bound together with a mixture of bitumen and hydrocarbon resin.

Conveniently, the material may comprise 5 to 10% bitumen, 5 to 10% hydrocarbon resin, up to 40% mineral fillers and up to 60% aggregate. Preferably, in order to provide additional resilience, part of the aggregate is replaced by rubber chips, amounting to 5 to 15% by weight of the entire material. The fibres which assist in providing for maintained continuity of the material, when laid as a bridge deck membrane, despite movement which can be expected in the bridge deck, preferably comprise less than 1% by weight of the material. Further to assist maintaining flexibility of the material, the mixture preferably is flexibilised with thermoplastic rubber copolymer material, this copolymer material itself preferably being styrene butadiene styrene (SBS) or styrene isoprene styrene (SIS). This copolymer material may comprise 1 to 2% by weight of the entire material.

Conveniently, the waterproofing material can be applied hot as a layer to the surface of a bridge deck or the like and then allowed to solidify. The thickness of the layer preferably is between 3 and 15 mm thick, more preferably still in the range of 6 and 8 mm thick.

An exemplary constitution of the waterproofing material comprising, by weight, approximately 5 parts bitumen, 5 parts hydrocarbon resin, 1 part thermoplastic block copolymer rubber, 30 parts mineral fillers, 35 to 45 parts aggregate and 5 to 15 parts rubber chips and less than 1 part fibres. The aggregate can have a particle size of up to 5 mm but a particular particle size which is found to give the desirable strength and resistance to penetration when laid as a membrane 6 to 8 mm thick is 3 mm single sized.

The rubber chips also have a particle size of up to 5 mm but are preferably 3 mm single sized. The rubber chips may be obtained by the shredding of rubber tyres, preferably after the tyre beads have been removed, and this can provide in many cases a suitable proportion of fibres as the chopped fibres bound together with the mixture. In general, where chopped fibres are added specifically to the mixture, they may conveniently comprise glass and/or metal fibres.

The hydrocarbon resin which is an essential constituent of the material preferably is a petroleum resin which can conveniently comprise a resin produced by the controlled polymerisation of an unsaturated $C_5$ petroleum fraction which has a softening point of approximately 95 to 105°C. A particular example of such a resin is the hydrocarbon resin which is sold under the tradename of Imprez 100 by ICI.

While the waterproofing material of the present invention has been described for use particularly in connection with bridge decks, it will be appreciated that it can readily be used for other purposes, especially where a strong, long-lived waterproofing membrane is required. Thus where it will be under relatively light wear, no or only a fairly light surface protection layer may be required. The material itself can very readily be heated and hot applied to a supporting surface with the resin, which has a higher melting point than the bitumen, being dissolved in the bitumen in order to provide a flexible but wear- and penetration-resistant material in cooperation with the filler aggregate and possibly rubber chips included therein.

## Claims

1. A waterproofing material comprising mineral fillers, aggregate and chopped fibres, bound together with a mixture of bitumen and hydrocarbon resin.

2. A material according to claim 1, which comprises 5 to 10% bitumen, 5 to 10% hydrocarbon resin, up to 40% mineral fillers and up to 60% aggregate.

3. A material according to claim 2, wherein part of the aggregate is replaced by rubber chips, amounting to 5 to 15% by weight of the material.

4. A material according to any preceding claim, wherein the fibres comprise less than 1% by weight of the material.

5. A material according to any preceding claim, wherein the mixture is flexibilised with thermoplastic rubber copolymer material.

6. A material according to claim 5, wherein the copolymer material is styrene butadiene styrene or styrene isoprene styrene.

7. A material according to claim 5 or 6, wherein the copolymer material comprises approximately 1 to 2% by weight of the waterproofing material.

8. A material according to any preceding claim, wherein the mixture comprises, by weight, approximately 5 parts bitumen, 5 parts hydrocarbon resin, 1 part thermoplastic block copolymer rubber, 30 parts mineral fillers, 35 to 45 parts aggregate, 5 to 15 parts rubber chips and less than 1 part fibres.

9. A material according to any preceding claim, wherein the aggregate has a particle size of up to 5 mm, preferably 3 mm single sized.

10. A material according to any preceding claim, wherein the rubber chips have a particle size of up to 5 mm, preferably 3 mm single sized.

11. A material according to any preceding claim, wherein the hydrocarbon resin is a resin produced by the controlled polymerisation of an unsaturated $C_5$ petroleum fraction and has a softening point of approximately 95 to 105°C.

12. A material according to claim 11, wherein the hydrocarbon resin is that which is sold under the tradename of Imprez 100 by ICI.

13. A material according to any preceding claim, wherein the hydrocarbon resin is dissolved in the bitumen.

14. A waterproofing material according to any preceding claim, wherein the chopped fibres comprise glass and/or metal fibres.

15. A waterproofing material according to any preceding claim, which is applied as a layer to the surface of a bridge deck or the like.

16. A waterproofing material according to claim 15, which has been applied hot and allowed to solidify.

17. A waterproofing material according to claim 15 or 16, wherein the layer is between 3 and 15 mm thick.

18. A waterproofing material according to claim 17, wherein the layer is between 6 and 8 mm thick.

European Patent
Office

# EUROPEAN SEARCH REPORT

Application Number

EP    91 30 9446

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DD-A-289 082 (VEB HYDRIERW. ZEITZ.; VEB KOMB. BAUF.; VEB CHEM. WERKE BUNA) <br> * the whole document * <br> --- | 1-3,5,8, 15 | C04B26/26 <br> E01C7/26 <br> E01D19/08 <br> C08L95/00 <br> // (C04B26/26, 14:42, 18:22, 24:26, 24:36) (C04B26/26, 14:48, 16:04, 24:26,24:36) |
| Y | EP-A-0 356 066 (FIBRESCREED LTD) <br><br> * column 2, line 13 - column 4, line 33; claims * <br> --- | 1-11, 14-18 | |
| Y | GB-A-2 181 439 (SHELL INTERNATIONAL RESEARCH MAATSCHAPPIJ) <br> * page 1, line 20 - page 2, line 48; claims 1-4,8-10 * <br> --- | 1-11, 14-18 | |
| Y | EP-A-0 352 066 (MITSUI PETROCHEMICAL INDUSTRIES LTD & NEC ENVIRONMENT ENGINEERING LTD) <br> --- | 1,2,4,8, 11,14 | |
| Y | EP-A-0 333 299 (HOLLANDSCHE BETON GROEP) <br><br> * page 1, line 21 - line 40; claims * | 1,2,4,8, 11,14 | |
| A | --- | 15 | |
| Y | EP-A-0 381 315 (FIBRESCREED LTD) <br><br> * column 1, line 38 - column 2, line 37; claims 1,3,4,6,11,12,13,16 * <br> --- | 1-11, 14-18 | |
| Y | US-A-4 430 465 (C.E.ABBOTT) <br><br> * column 2, line 43 - column 5, line 8; claims 1,5,6,11,12 * <br> --- | 1-11, 14-18 | |
| A | EP-A-0 202 966 (BEUGNET SA) <br><br> * column 1, line 40 - column 3, line 20; claims * <br> --- | 1,3, 5-10,15 | |
| A | FR-A-2 153 355 (USS ENGINEERS AND CONSULTANTS INC.) | 1,5,6,8 | |

TECHNICAL FIELDS
SEARCHED (Int. Cl.5)

C04B
E01C
E01D
C08L

The present search report has been drawn up for all claims

| Place of search | Date of completion of the search | Examiner |
|---|---|---|
| THE HAGUE | 28 JANUARY 1992 | THEODORIDOU E. |

EPO FORM 1503 03.82 (P0401)